# EUROPÄISCHE PATENTSCHRIFT

(11) **EP 2 410 400 B1**
(45) Veröffentlichungstag und Bekanntmachung des Hinweises auf die Patenterteilung: **12.06.2013**
(21) Anmeldenummer: 10170595.2
(22) Anmeldetag: 23.07.2010
(51) Int. Cl.: G06F 3/01, G06F 3/03

(54) **Medizintechnisches Anzeigegerät mit einer Eingabeoberfläche und Verfahren zum Ansteuern eines solchen Geräts**
Medicinal display device with an input interface and method for controlling such a device
Agrégat d'affichage médical doté d'une surface de saisie et procédé de commande d'un tel appareil

(43) Veröffentlichungstag der Anmeldung: 25.01.2012
(73) Patentinhaber: BrainLAB AG, 85622 Feldkirchen (DE)
(72) Erfinder: Lausser, Markus, 81929, München (DE)
(74) Vertreter: Schwabe - Sandmair - Marx

(56) Entgegenhaltungen:
- US-A1- 2003 048 260
- US-A1- 2006 190 836
- US-A1- 2007 214 462
- US-A1- 2008 042 979
- US-B1- 6 283 860

## Beschreibung

Die vorliegende Erfindung betrifft ein Verfahren zum Ansteuern eines medizintechnisches Anzeigegeräts mit einem Eingabebereich, bei dem Eingabegeräte und/oder Körperteile eines Benutzers identifiziert werden, und Eingabebefehle aus einem vorbestimmten Befehlssatz ausgeführt werden, je nachdem mit welchem der identifizierten Eingabegeräte und/oder Körperteile eine Eingabe am Anzeigegerät getätigt wird. Die vorliegende Erfindung betrifft ferner ein medizintechnisches Anzeigegerät mit Sensoren, welche sowohl Eingabegeräte und/oder Körperteile eines Benutzers identifizieren, als auch eine Eingabe mittels eines identifizierten Eingabegeräts und/oder Körperteils registrieren, so dass das Anzeigegerät einen Eingabebefehl in Abhängigkeit davon ausführt, mit welchem identifizierten Eingabegerät oder Körperteil eines Benutzers eine Eingabe am Anzeigegerät erfolgt.

Aus dem Stand der Technik sind Sensorbildschirme/Touchscreens bekannt, mithilfe derer Eingaben nicht mehr über Tastatur oder Computermaus erfolgen, sondern durch Berührung des Bildschirms. So kann die unter Umständen erschwerte (etwa beim Tragen von Handschuhen) oder zu vermeidende (etwa aus Hygienegründen) Benutzung einer Tastatur oder Computermaus umgangen werden. Allerdings geht bei Eingaben über einen Sensorbildschirm eine gewisse Anzahl von Eingabemöglichkeiten verloren. So muss etwa auf die Unterscheidung von rechter und linker Maustaste verzichtet werden. Daher ist man in letzter Zeit zu Sensorbildschirmen übergegangen, welche auch mehrere gleichzeitige Eingaben registrieren, sogenannte Multi-Touch-Screens. Bei solchen stehen dem Benutzer mehr Eingabemöglichkeiten zur Verfügung als bei herkömmlichen Touchscreens. Allerdings wäre es auch bei aktuellen Multi-Touch-Screens wünschenswert, noch mehr Eingabemöglichkeiten bereitzustellen, um insbesondere auch intuitive Eingaben zu ermöglichen, so dass der Benutzer nicht erst einzelne Eingabebefehle erlernen muss.

Diese Aufgabe wird durch den Gegenstand der unabhängigen Patentansprüche 1 und 5 gelöst. Die Unteransprüche definieren dabei bevorzugte Ausführungsformen der vorliegenden Erfindung.

Zum Ansteuern eines Geräts mit einer Eingabeoberfläche umfasst das erfindungsgemäße Verfahren die Schritte laut verfahren 1.

Mit anderen Worten werden beim erfindungsgemäßen Verfahren zuerst die Geräte und Körperteile identifiziert, welche für eine Eingabe an der Eingabeoberfläche in Frage kommen. Dies können insbesondere Eingabestifte oder Finger und Hände eines Benutzers sein. Diese Eingabegeräte oder Körperteile können hierbei Merkmale aufweisen, welche eine Identifizierung der Eingabegeräte oder Körperteile vereinfachen, wie beispielsweise von einem Trackingsystem erfassbare Marker oder Markeranordnungen, welche individuell für jedes Eingabegerät oder Körperteil ausgestaltet sind und an den zu identifizierenden Eingabegeräten oder Körperteilen angebracht sind. Auch wäre die Identifizierung mittels unterschiedlicher an den Eingabegeräten oder Körperteilen angebrachter Kennzeichnungsmerkmale, wie etwa RFID-Chips, Responder oder ähnlichem denkbar.

Bevorzugterweise werden die zu identifizierenden Eingabegeräte oder Körperteile jedoch anhand optischer Merkmale bzw. optisch sichtbarer Eigenschaften identifiziert. Dies können etwa Umrisse, Farben, Oberflächen oder Formen der entsprechenden Geräte oder Körperteile sein. Eine solche Identifizierung anhand optischer Merkmale ist aus dem Stand der Technik prinzipiell bekannt. Zusätzlich wird die Position und/oder die Ausrichtung der erfassten Eingabegeräte oder Körperteile bestimmt. Auf diese Weise ist es möglich, den einzelnen identifizierten Eingabegeräten oder Körperteilen eine Position und Ausrichtung im Raum zuzuweisen. Bei steter Positions- und/oder Ausrichtungsbestimmung ist die Position und Ausrichtung der erfassten Eingabegeräte und/oder Körperteile im Raum zu jeder Zeit bekannt, was insbesondere für den folgenden Schritt von Bedeutung ist:
Gemäß dem erfindungsgemäßen Verfahren wird zusätzlich eine über den Eingabebereich des medizintechnischen Anzeigegeräts erfolgende Eingabe registriert. Der Begriff Eingabe kann in dem Sinne verstanden werden wie bei der Bedienung eines herkömmlichen Touchscreens. Dort wird mittels einer Berührung der Anzeigeoberfläche und eines darin integrierten resistiven, induktiven oder kapazitiven Berührungssensors, der eine Berührung der Anzeige an einer bestimmten Stelle der Anzeige registriert, ein entsprechender auszuführender Befehl ausgeführt. So können auf der Anzeige etwa unterschiedliche Felder für unterschiedliche Maschinenbefehle angezeigt werden, wobei ein entsprechender Maschinenbefehl ausgeführt wird, sobald der Benutzer das entsprechende Feld berührt.

Zwar können die oben beschriebenen Verfahrensschritte in der obigen Reihenfolge durchgeführt werden, es ist jedoch auch vorstellbar, dass von dieser Reihenfolge beliebig abgewichen wird, die Registrierung beispielsweise erst nach der Identifizierung erfolgt. Auch eine gleichzeitige Durchführung dieser Verfahrensschritte wäre denkbar. Der nachfolgend beschriebene Schritt ist jedoch erst möglich, wenn alle Ergebnisse der oben beschriebenen Schritte vorhanden sind. Auf Basis der Ergebnisse der vorhergehenden Schritte wird nämlich ein

Eingabebefehl aus einem vorbestimmten Befehlssatz ausgewählt und ausgeführt. Zur Verdeutlichung soll folgendes Beispiel gegeben werden:
Ein Benutzer steht vor dem Eingabebereich und seine linke sowie seine rechte Hand werden mittels ihrer geometrischen Eigenschaften (linke Hand: beispielsweise Daumen vom Eingabebereich aus gesehen links; rechte Hand: beispielsweise Daumen vom Eingabebereich aus gesehen rechts) identifiziert. Zusätzlich werden beide Hände im Raum verfolgt, so dass deren Position relativ zum Eingabebereich bekannt ist. Erfolgt nun eine Eingabe über den Eingabebereich, weiß das System, ob die Eingabe mit der linken oder der rechten Hand erfolgt ist. Sofern für die linke und die rechte Hand unterschiedliche Befehlssätze vorgesehen sind, wird beim erfindungsgemäßen Verfahren mit der linken Hand ein anderer Befehl ausgeführt werden als mit der rechten Hand, selbst wenn beide Eingaben beispielsweise mit einem Zeigefinger erfolgten. So kann etwa eine Eingabe mit einem Finger der linken Hand den Befehl "Bild zurück" bedeuten, während eine Eingabe mit einem Finger der rechten Hand den Befehl "Bild vor" auslöst.

Gemäß einer bevorzugten Ausführungsform der vorliegenden Erfindung erfolgt die Identifizierung mittels eines optischen Sensors, insbesondere mittels einer Kamera, welche sichtbare Eigenschaften der Eingabegeräte oder Körperteile vor oder im Eingabebereich erfasst.

Es wäre denkbar, eine Eingabe dann zu registrieren, wenn die Anzeige des Anzeigegeräts wie bei einem gewöhnlichen Touchscreen mittels eines Eingabegeräts und/oder Körperteils berührt wird, wobei zusätzlich vorgesehen sein kann, dass für eine Eingabe eine vorbestimmte Kraft vom Eingabegerät und/oder Körperteil auf die Anzeige ausgeübt werden muss. Eine solche Registrierung der Eingabe könnte mittels induktiver, kapazitiver oder resisitiver Berührungssensoren erfolgen. Die Oberfläche der Anzeige ist in diesem Fall als Eingabebereich zu verstehen.

Bevorzugterweise wird gemäß der vorliegenden Erfindung eine Eingabe jedoch dadurch registriert, indem man mit einem Eingabegerät und/oder Körperteil in ein Volumen vor der Anzeige des Anzeigegeräts eindringt und ein oder mehrere Sensoren die Präsenz eines oder mehrerer Eingabegeräte(s) und/oder Körperteile(s) im Eingabebereich registrieren, wobei eine solche Präsenz als Eingabe gedeutet wird. Der Eingabebereich wird in einem solchen Falle als Volumenbereich verstanden, der sich über die Anzeige des Anzeigegeräts hinweg erstreckt bzw. die Anzeige überspannt und eine vorbestimmte Dicke von wenigen Millimetern oder Zentimetern aufweist. Diese Dicke ist im Vergleich zur Höhe und Breite der Anzeige und somit zur Höhe und Breite des Eingabebereichs relativ gering, kann jedoch je nach Anwendungsfall beliebig variiert werden.

Die Registrierung der Präsenz von Objekten bzw. Eingabegeräten und/oder Körperteilen im Eingabebereich kann mittels optischer Sensoren erfolgen. Es wäre denkbar, dass über der Anzeige ein Infrarotlicht-Gitter "aufgespannt" ist, so dass die Präsenz eines Objekts im Eingabebereich über die Unterbrechung einzelner Laserstrahlen in einer gewissen Höhe und Breite relativ zur Anzeige bestimmt werden kann. Darüber hinaus wäre es auch vorstellbar, dass der Bereich von zumindest zwei optischen Sensoren bzw. Kameras erfasst/"überwacht" wird, wobei die sich im Eingabebereich befindenden Objekte von den zumindest zwei Kameras erfasst werden und so die Position jedes einzelnen Objekts relativ zur Anzeige aus den erhaltenen Kamerabildern herausgerechnet werden kann.

Hier wird also nicht eine Berührung einer Oberfläche als Eingabe registriert, sondern das Eindringen oder Vorhandensein eines Objekts in einem dreidimensionalen Eingabebereich. Eine Kombination beider Eingabemöglichkeiten, nämlich Berührung und Präsenz wäre jedoch auch vorstellbar.

Durch Zuordnung unterschiedlicher Befehlssätze zu den einzelnen Eingabegeräten oder Körperteilen werden die möglichen Eingabebefehle gegenüber herkömmlichen Touchscreens vervielfacht, da nicht nur zwischen einzelnen oder mehreren Eingaben/Berührungen unterschieden wird, sondern auch erkannt wird, mit welchem Eingabegerät oder Körperteil die entsprechende Eingabe erfolgt.

Sofern wie bei weiteren bevorzugten Ausführungsformen die Körperteile Hände und/oder Finger sind und zudem zwischen einer linken Hand und einer rechten Hand des Benutzers differenziert wird, kommt ein großer Vorteil der vorliegenden Erfindung zum Tragen, nämlich die Möglichkeit einer intuitiven Benutzung eines Geräts. Stellt man sich vor, dass ein Rechtshänder bei der Bearbeitung von Objekten diese ausschließlich mit der linken Hand hält und mit der rechten Hand bearbeitet, würde eine Transferierung dieses Gedankens auf die Ansteuerung eines Geräts das mühsame Erlernen einzelner "Eingabecodes" zumindest zum großen Teil überflüssig machen. Wenn beispielsweise ein dargestelltes Objekt grafisch bearbeitet werden soll, können beispielsweise die Befehle "Halten" und "Verschieben" des Objekts der linken Hand des Benutzers zugewiesen werden, während Bearbeitungsbefehle wie etwa "Trajektorie durch das Objekt legen" oder "Markieren des Objekts" der rechten Hand zugewiesen werden. Eine weitere Vervielfachung der Eingabemöglichkeiten kann dadurch erreicht werden, wenn neben der Differenzierung zwischen linker und rechter Hand auch zwischen einzelnen Fingern einer bzw. beider Hände unterschieden wird. Auch kann zwischen einzelnen und zeitlich aufeinanderfolgenden und/oder mehreren gleichzeitigen Eingaben/Berührungen unterschieden werden.

Ferner ist es denkbar, zwischen Händen unterschiedlicher Personen zu unterscheiden. Ebenso könnte die vorliegende Erfindung mit einer sogenannten Gestenerkennung kombiniert werden, welche einzelne Bewegungen von Eingabegeräten und/oder Körperteilen erkennt und diesen vorbestimmte Befehle zuordnet. Vorstellbar wäre es auch, einzelne markante Gesten des Benutzers als "nervöse Gesten" zu deuten und eine entsprechende Eingabe zu ignorieren, so dass ungewollte Eingaben nicht als Eingabe gedeutet werden. Insbesondere in Verbindung mit einer Gesichtserkennung könnte die Verfassung des die Eingabe tätigenden Benutzers registriert werden und je nach Verfassung ein unterschiedlicher Befehl ausgeführt werden. Ebenso könnte additiv oder alternativ eine Geräuscherkennung vorgesehen sein, die Geräusche in der Umgebung des Geräts registriert und je nach Geräuschart oder Lautstärke unterschiedliche Befehle auslöst.

Ein weiterer Aspekt der vorliegenden Erfindung betrifft ein medizintechnisches Anzeigegerät mit einem mit einem Eingabebereich, welches mittels eines Sensors Eingabegeräte und/oder Körperteile eines Benutzers auf Basis einer den Eingabegeräten und/oder Körperteilen innewohnenden Eigenschaft identifiziert und deren Position und/oder Ausrichtung bestimmt, mittels eines Sensors eine mit einem identifizierten Gerät und/oder Körperteil erfolgende Eingabe registriert und einen auf Basis einer Kombination der Sensorergebnisse ausgewählten Eingabebefehl aus einem vorbestimmten Befehlssatz ausführt.

Mit anderen Worten erkennt und differenziert das erfindungsgemäße Anzeigegerät unterschiedliche Eingabegeräte und Körperteile, welche zur Eingabe am Eingabebereich vorgesehen sind. Da durch fortlaufendes Tracking das Gerät auch stets weiß, wo sich die einzelnen identifizierten Eingabegeräte und Körperteile gerade befinden, weiß es auch, mit welchen der identifizierten Geräte oder Körperteile dann eine Eingabe über den Eingabebereich erfolgt. So führt das Gerät einen der Kombination der Sensorergebnisse entsprechenden und aus einem vorbestimmten Befehlssatz ausgewählten Eingabebefehl aus.

In einer bevorzugten Ausführungsform ist der Eingabebereich ein sich über eine Anzeige des Anzeigegeräts erstreckendes Volumen vorbestimmter Dicke. Denkbar wäre allerdings auch ein herkömmlicher Touchscreen, welcher vom Benutzer berührt wird.

Gemäß einer weiteren bevorzugten Ausführungsform ist der Sensor, mit dem die den Eingabegeräten und/oder Körperteilen innewohnenden Eigenschaften wie etwa Form, Farbe, Oberflächenstruktur oder Umriss erfasst werden, ein auf den Bereich vor und/oder in den Eingabebereich gerichteter optischer Sensor, insbesondere eine Kamera, die in das Gehäuse des Geräts integriert sein kann. Eine solche Kamera "überwacht" demnach zumindest den gesamten Bereich vor dem Eingabebereich bzw. dem Touchscreen des Geräts und identifiziert sämtliche in diesem Bereich befindliche Eingabegeräte oder Körperteile. Nachdem die Kamera im Gehäuse des Geräts mit integriert ist, kann der Erfassungsbereich der Kamera auch nicht durch andere Körperteile des Benutzers verdeckt werden, so dass man nicht Gefahr läuft, dass einzelne Körperteile oder Eingabegeräte zeitweise nicht identifiziert werden können.

Wie schon auch oben beschrieben unterscheidet das Gerät gemäß einer weiteren bevorzugten Ausführungsform zwischen der linken und der rechten Hand eines Benutzers und weist der linken und der rechten Hand unterschiedliche Befehlssätze zu. Weiß man etwa durch vorherige Eingaben, ob es sich beim momentanen Benutzer um einen Links- oder Rechtshänder handelt, können besonders "benutzerfreundliche" intuitive Eingabebefehle ausgewählt werden.

Um Berührungen der Eingabeoberfläche zu registrieren ist es möglich, einen in die Eingabeoberfläche integrierten resistiven, kapazitiven oder induktiven Berührungssensor vorzusehen. Es ist jedoch auch ein Lichtschrankensystem oder Kamerasystem vorstellbar, welches ein Eindringen oder eine Präsenz eines Objekts in den dreidimensionalen Eingabebereich unmittelbar vor der Oberfläche bzw. Anzeige registriert. Sofern die Registrierung einer Eingabe den gleichen Grundsätzen folgt wie die Identifizierung eines Eingabegeräts/Körperteils, also beides etwa mittels optischer Sensoren durchgeführt wird, wäre es denkbar, dass ein und dieselben Sensoren sowohl die sich vor oder im Eingabebereich befindenden Eingabegeräte oder Körperteile identifizieren und zugleich deren Präsenz im Eingabebereich registrieren. Mit anderen Worten wird also eine Eingabe registriert, sobald ein mittels der Kameras oder Sensoren getracktes Eingabegerät oder Körperteil einen vorbestimmten Abstand zum Bildschirm unterschreitet.

Besonders bevorzugt ist die Anwendung der vorliegenden Erfindung auf einen digitalen Lichtkasten. Auf diese Weise werden Eingaben über schwer zu sterilisierende Tastaturen und Computermäuse vermieden und zudem eine intuitive Benutzung des digitalen Lichtkastens ermöglicht.

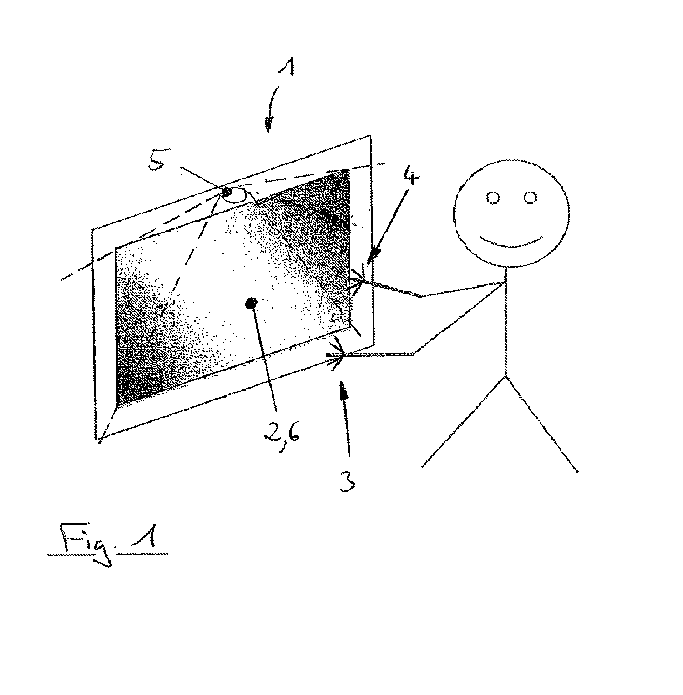

Eine bevorzugte Ausführungsform der vorliegenden Erfindung wird anhand der beiliegenden Figur 1 näher erläutert. Die Erfindung kann die gezeigten Merkmale einzeln sowie in jedweder sinnvollen Kombination umfassen.

In der Figur 1 ist ein erfindungsgemäßes medizintechnisches Anzeigegerät 1 mit einem Bildschirm 2 gezeigt. Mittels nicht näher bezeichneten Sensoren werden Präsenzen von Objekten im Eingabebereich unmittelbar vor dem Bildschirm registriert. Solche Präsenz können entweder solche von Eingabegeräten oder wie in diesem Beispiel gezeigt, von einer linken Hand 3 und/oder einer rechten Hand 4 eines Benutzers sein, der sich vor dem Anzeigegerät 1 befindet. Sobald im gezeigten Beispiel also ein oder mehrere Finger einen gewissen Mindestabstand zum Bildschirm unterschreiten, wird dies als Eingabe gedeutet.

Eine im Rahmen des Anzeigegeräts 1 befindliche Kamera 5 überwacht den gesamten Bereich vor dem Bildschirm 2 und trackt somit auch die Hände 3, 4 des Benutzers. Anhand der spezifischen Form der rechten und der linken Hand 3, 4 erkennt eine im Gerät integrierte und nicht gezeigte Rechnereinheit mit einem entsprechenden Softwaremodul, ob es sich bei der oder den von der Kamera 5 beobachteten Hand/Hände um eine rechte oder linke Hand handelt. Hierbei weiß das Softwaremodul, welche Form eine rechte bzw. linke Hand hat und erkennt in einer bzw. mehreren von der Kamera 5 beobachteten Händen eine linke oder eine rechte Hand.

Wenn eine Eingabe durch eine oder beide Hände 3, 4 erfolgt und die Recheneinheit über die Kamera 5 die Raumposition der Hände 3, 4 vor den Bildschirm 2 kennt, kann sie leicht bestimmen, ob es sich bei einer gerade erfolgten Eingabe an einer bestimmten Position des Bildschirms 2 um eine Eingabe mit der rechten Hand 4 oder mit der linken Hand 3 handelt. Je nachdem ob es sich um eine Eingabe mittels der rechten Hand 4 oder linken Hand 3 handelt, führt das Gerät 1 einen Eingabebefehl aus vorbestimmten Befehlssätzen aus, die sowohl für die rechte Hand als auch für die linke Hand hinterlegt wurden.

## Patentansprüche

1. Verfahren zum Ansteuern eines medizinischen Anzeigegeräts (1) mit einem Eingabebereich (2) mit folgenden Schritten:
- Identifizieren *der linken Hand (3) und der rechten Hand* (4) eines Benutzers *mittels ihrer geometrischen Eigenschaften;* ;
- Bestimmen der Position und/oder Ausrichtung der identifizierten *Hände* (3, 4), *wobei beide Hände (3, 4) im Raum verfolgt werden, so dass deren Position relativ zum Eingabebereich* (2) *bekannt ist;*
- Registrieren einer mit *der linken Hand (3) oder der rechten Hand* () erfolgenden Eingabe; und
- Ausführen eines auf Basis einer Kombination der Ergebnisse der vorhergehenden Schritte ausgewählten Eingabebefehls aus einem vorbestimmten Befehlssatz, *wobei für die linke Hand (3) und die rechte Hand (4) unterschiedliche Befehlssätze vorgesehen sind, so dass bei einer Eingabe mit der linsen Hand (3) ein anderer Befehl als bei einer Eingabe mit der rechten Hand (4) ausgeführt wird.*

2. Verfahren nach Anspruch 1, wobei die Identifizierung eine optische Identifizierung mittels eines optischen Sensors (5), insbesondere mittels einer

3. Verfahren nach *Anspruche 1 oder 2*, wobei die Präsenz *linken oder rechten Hand* (3, 4) in einem den Bildschirm (2) des Anzeigegeräts (1) überspannenden Bereich vorbestimmter Dicke als Eingabe registriert wird.

4. Verfahren nach einem der Ansprüche 1 bis 63, wobei sowohl einzelne als auch zeitlich aufeinander folgende und/oder mehrere gleichzeitige Eingaben registriert werden.

5. Medizinisches Anzeigegerät (1) mit einem Eingabebereich (2), welches mittels eines Sensors (5) *linke Hand (3) und die rechte Hand* (4) eines Benutzers *mittels ihrer geometrischen Eigenschaften* identifiziert und die Position und/oder Ausrichtung *der linken Hand (3) und der rechten Hand (4)* bestimmt, *wobei die beiden identifizierten Hände (3, 4) mittels des Sensors (5) im Raum verfolgt werden, so dass deren Position relativ zum Eingabebereich (2) bekannt ist* , mittels eines *weiteren* Sensors (6) eine mit *der linken Hand (3) oder der rechten Hand* (4) erfolgende Eingabe registriert, *wobei das Anzeigegerät (1)* einen auf Basis einer Kombination der Sensorergebnisse ausgewählten Eingabebefehl aus einem vorbestimmten Befehlssatz ausführt, *wobei für die linke Hand (3) und die rechte Hand (4) unterschiedliche Befehlssätze vorgesehen sind, so dass bei einer Eingabe mit der linken Hand (3) ein anderer Befehl als bei einer Eingabe mit der rechten Hand (4) ausgeführt wird.*

6. Medizinisches Anzeigegerät nach Anspruch *5*, wobei das Anzeigegerät (1) sowohl einzelne als auch zeitlich aufeinander folgende und/oder mehrere gleichzeitige Eingaben registriert.

7. Medizinisches Anzeigegerät nach Anspruch *5* oder *6,* wobei der Eingabebereich (2) eine vorbestimmte Dicke aufweist und einen Bildschirm (2) des Anzeigegeräts (1) überspannt.

8. Medizinisches Anzeigegerät nach einem der Ansprüche *5* bis *7,* wobei *der* Sensor (5) ein auf einen Bereich vor dem Eingabebereich (2) gerichteter optischer Sensor (5), insbesondere eine Kamera (5) ist, der/die im Speziellen im Gehäuse des Anzeigegeräts (1) integriert ist.

9. Medizinisches Anzeigegerät nach einem der Ansprüche *5* bis *8*, wobei *der* weitere Sensor (6) die Präsenz *der linken oder rechten Hand* (3, 4) *des* Benutzers in einem den Bildschirm (2) des Anzeigegeräts (1) überspannenden Bereich vorbestimmter Dicke registriert.

10. Medizinisches Anzeigegerät nach einem der Ansprüche *5* bis *9*, wobei das Anzeigegerät (1) ein digitaler Lichtkasten (1) ist.

## Claims

1. A method for controlling a medical display device (1) comprising an input region (2), comprising the steps of:
- identifying the left hand (3) and the right hand (4) of a user by means of their geometrical properties;
- determining the position and/or orientation of the identified hands (3, 4), wherein the two hands (3, 4) are spatially tracked, such that their position relative to the input region (2) is known;
- registering an input made using the left hand (3) or the right hand (4); and
- performing an input command, selected from a predetermined set of commands on the basis of a combination of the results of the preceding steps, wherein different sets of commands are provided for the left hand (3) and the right hand (4), such that a different command is performed when an input is made using the left hand (3) than when an input is made using the right hand (4).

2. The method according to Claim 1, wherein identification is performed optically by means of an optical sensor (5), in particular a camera (5).

3. The method according to Claim 1 or 2, wherein the presence of the left or right hand (3, 4) within a region of a predetermined thickness which spans the screen (2) of the display device (1) is registered as an input.

4. The method according to any one of Claims 1 to 3, wherein both individual inputs and chronologically consecutive inputs and/or multiple simultaneous inputs are registered.

5. A medical display device (1) comprising an input region (2), which identifies the left hand (3) and the right hand (4) of a user by means of a sensor (5) and by means of their geometrical properties and determines the position and/or orientation of the left hand (3) and the right hand (4), wherein the two identified hands (3, 4) are spatially tracked by means of the sensor (5) such that their position relative to the input region (2) is known, and registers an input made using the left hand (3) or the right hand (4) by means of another sensor (6), wherein the display device (1) performs an input command, selected from a predetermined set of commands on the basis of a combination of the sensor results, wherein different sets of commands are provided for the left hand (3) and the right hand (4), such that a different command is performed when an input is made using the left hand (3) than when an input is made using the right hand (4).

6. The medical display device according to Claim 5, wherein the display device (1) registers both individual inputs and chronologically consecutive inputs and/or multiple simultaneous inputs.

7. The medical display device according to Claim 5 or 6, wherein the input region (2) exhibits a predetermined thickness and spans a screen (2) of the display device (1).

8. The medical display device according to any one of Claims 5 to 7, wherein the sensor (5) is an optical sensor (5), in particular a camera (5), which is directed onto a region in front of the input region (2) and is specifically integrated in the housing of the display device (1).

9. The medical display device according to any one of Claims 5 to 8, wherein the other sensor (6) registers the presence of the left or right hand (3, 4) of the user within a region of a predetermined thickness which spans the screen (2) of the display device (1).

10. The medical display device according to any one of Claims 5 to 9, wherein the display device (1) is a digital light box (1).

## Revendications

1. Procédé pour commander un appareil d'affichage médical (1) avec une zone d'entrée (2), comportant les étapes suivantes consistant à :
- identifier la main gauche (3) et la main droite (4) d'un utilisateur au moyen de leurs caractéristiques géométriques,
- déterminer la position et/ou l'orientation des mains identifiées (3, 4), les deux mains (3, 4) étant suivies dans l'espace de telle sorte que leur position par rapport à la zone d'entrée (2) est connue,
- enregistrer une entrée effectuée avec la main gauche (3) ou la main droite (4), et
- exécuter une instruction d'entrée sélectionnée sur la base d'une combinaison des résultats des étapes précédentes parmi un jeu d'instructions prédéterminé, différents jeux d'instructions étant prévus pour la main gauche (3) et la main droite (4) de telle sorte que lors d'une entrée avec la main gauche (3), une instruction différente de celle associée à une entrée avec la main droite (4) est exécutée.

2. Procédé selon la revendication .1, dans lequel l'identification est une identification optique au moyen d'un capteur optique (5), en particulier au moyen d'une caméra (5).

3. Procédé selon la revendication 1 ou 2, dans lequel la présence de la main gauche ou droite (3, 4) dans une zone d'épaisseur prédéterminée couvrant l'écran (2) de l'appareil d'affichage (1) est enregistrée comme une entrée.

4. Procédé selon l'une quelconque des revendications 1 à 3, dans lequel aussi bien des entrées individuels que des entrées successives dans le temps et/ou plusieurs entrées simultanées sont enregistrées.

5. Appareil d'affichage médical (1) avec une zone d'entrée (2) qui, au moyen d'un capteur (5), identifie la main gauche (3) et la main droite (4) d'un utilisateur en utilisant leurs caractéristiques géométriques, et détermine la position et/ou l'orientation de la main gauche (3) et de la main droite (4), dans lequel les deux mains identifiées (3, 4) sont suivies dans l'espace au moyen du capteur (5) de telle sorte que leur position par rapport à la zone d'entrée (2) est connue, une entrée effectuée avec la main gauche (3) ou la main droite (4) est enregistrée au moyen d'un capteur supplémentaire (6), dans lequel l'appareil d'affichage (1) exécute une instruction d'entrée sélectionnée sur la base d'une combinaison des résultats des capteurs parmi un jeu d'instructions prédéterminé, dans lequel lors d'une entrée avec la main gauche (3), une instruction différente de celle associée à une entrée avec la main droite (4) est exécutée.

6. Appareil d'affichage médical selon la revendication 5, dans lequel l'appareil d'affichage (1) enregistre aussi bien des entrées individuels que des entrées successives dans le temps et/ou plusieurs entrées simultanées.

7. Appareil d'affichage médical selon la revendication 5 ou 6, dans lequel la zone d'entrée (2) a une épaisseur prédéterminée et couvre un écran (2) de l'appareil d'affichage (1).

8. Appareil d'affichage médical selon l'une quelconque des revendications 5 à 7, dans lequel le capteur (5) est un capteur optique (5), en particulier une caméra (5), dirigé vers une zone située devant la zone d'entrée (2), lequel capteur est spécialement intégré dans le boîtier de l'appareil d'affichage (1).

9. Appareil d'affichage médical selon l'une quelconque des revendications 5 à 8, dans lequel le capteur supplémentaire (6) enregistre la présence de la main gauche ou droite (3, 4) de l'utilisateur dans une zone d'épaisseur prédéterminée couvrant l'écran (2) de l'appareil d'affichage (1).

10. Appareil d'affichage médical selon l'une quelconque des revendications 5 à 9, dans lequel l'appareil d'affichage (1) est un caisson lumineux numérique (1).
